(19) Europäisches Patentamt
European Patent Office
Office européen des brevets

(11) Veröffentlichungsnummer : **0 188 785 B2**

# (12) NEUE EUROPÄISCHE PATENTSCHRIFT

(45) Veröffentlichungstag der neuen Patentschrift : **21.10.92 Patentblatt 92/43**

(51) Int. Cl.$^5$ : **C09K 19/38**, G11B 7/24

(21) Anmeldenummer : **85116322.0**

(22) Anmeldetag : **20.12.85**

## (54) Verwendung von Polymeren mit Flüssigkristalleigenschaften als Informationsträger.

(30) Priorität : **12.01.85 DE 3500838**

(43) Veröffentlichungstag der Anmeldung : **30.07.86 Patentblatt 86/31**

(45) Bekanntmachung des Hinweises auf die Patenterteilung : **14.09.88 Patentblatt 88/37**

(45) Bekanntmachung des Hinweises auf die Entscheidung über den Einspruch : **21.10.92 Patentblatt 92/43**

(84) Benannte Vertragsstaaten : **DE FR GB IT NL**

(56) Entgegenhaltungen : **EP-A- 0 007 574**

(56) Entgegenhaltungen :
**EP-A- 0 171 045**
**DE-A- 2 722 589**
**DE-A- 3 211 400**
**DE-A- 3 324 770**
**SU-A- 887 574**

(73) Patentinhaber : **Röhm GmbH**
**Kirschenallee Postfach 4242**
**W-6100 Darmstadt 1 (DE)**

(72) Erfinder : **Springer, Jürgen, Prof. Dr. rer.nat.**
**An den Hubertshäusern 3e**
**W-1000 Berlin 38 (DE)**
Erfinder : **Loboda-Cackovic, Jasna, Dr.**
**Im Dol 60**
**W-1000 Berlin 33 (DE)**
Erfinder : **Cackovic, Hinko, Dr.**
**Im Dol 60**
**W-1000 Berlin 33 (DE)**

EP 0 188 785 B2

**Beschreibung**

Die Erfindung betrifft die Verwendung von Polymeren mit flüssig-kristallinen Seitengruppen, deren Eigenschaften die Anwendung als Informationsträger, speziell als Träger optisch ablesbarer Information gestatten.

Thermotrope Flüssigkristalle werden allgemein als stark anisotrope Flüssigphasen betrachtet, die zwischen den Begrenzungen: Feste Phase und konventionelle isotrope flüssige Phase existieren. Die Anisotropie der Phase ist eine Folge der regelmässigen Anordnung der molekularen Bausteine. Die Struktur der molekularen Bausteine von Substanzen mit Flüssig-Kristalleigenschaften ist bereits stark anisotrop. Die Moleküle besitzen z. B. ein Verhältnis Länge zu Dicke von über drei und können als mehr oder weniger starre Stäbchen betrachtet werden. Diese Strukturanisotropie bewirkt unter anderem, dass bezogen auf die Molekül-Längsachse die intermolekularen Wechselwirkungen senkrecht zur Achse stärker sind als in ihrer Richtung. Während für die festen Kristalle ein dreidimensionales Ordnungsprinzip gilt, sind die molekularen Einheiten der Füssigkristalle zwei- oder eindimensional geordnet. Optische, rheologiesche und thermodynamische Unterschiede gestatten eine Einteilung der flüssigkristallinen Phasen in a) smektische, b) nematische und c) cholesterische Phasen (vgl. Ullmanns Encyklopädie der Techn. Chemie, 4. Auflage, Bd. 11).

Smektische Phasen a) zeigen einen zweidimensionalen Schichten-Aufbau, wobei die Schichten leicht gegeneinander verschoben werden können. Nematische Phasen b) sind durch eine Parallelorientierung der Moleküllängsachsen gekennzeichnet, wobei der seitliche Zusammenhalt zwischen den Molekülen gering ist, so dass die Moleküle frei aneinander vorbeigleiten können. Eine Parallelorientierung der Moleküle in nematischen Phasen über grössere Bereiche hinweg (z. B. in Anzeigesegmenten) erfordert zusätzlichen Energieaufwand in Form von magnetischen oder elektrischen Feldern. Bei der cholesterischen Mesophase c) sind zwar die Moleküllängsachsen parallel zueinander angeordnet wie bei nematischen Phasen, so dass Schichten mit einheitlicher Vorzugsrichtung der Moleküle parallel zur Schichtebene vorhanden sind. Die Richtung der Moleküllängsachsen ändert sich jedoch von Schicht zu Schicht in regelmässiger Weise. Zur Charakterisierung der thermodynamischen Stabilität flüssigkristalliner Phasen gibt man häufig den Klärpunkt an, d.h. diejenige Temperatur, bei der der Energie-Inhalt der anisotropen und der isotropen flüssigen Phase gleich sind, so dass beide Phasen nebeneinander vorliegen. Vielfach zeigen Flüssigkristalle Polymorphie, d. h. sie können mehr als eine Art von mesomorpher Struktur annehmen, z. B. in Abhängigkeit von Temperatur, Zusammensetzung und/oder vewendetem Lösungsmittel z. B. bei lyotropen Systemen.

Die Technik hat sich die Eigenschaften der Flüssigkristalle für eine Reihe von Anwendungen zunutze gemacht. Besondere Bedeutung hat die Anwendung elektrooptischer Effekte auf dem Gebiet der Anzeige (Armbanduhren, Taschenrechner, digitale Messgeräte, Grossanzeigen) gewonnen. Die meisten Flüssigkristalle sind sehr empfindlich gegenüber äusseren Einflüssen, so dass sie im allgemeinen von der Umwelt abgeschirmt, d. h. versiegelt werden müssen.

Technische Anwendung haben bisher nur Polymere mit flüssigkristallinen Gruppen in der Hauptkette gefunden. Hierbei führt die Parallelanordnung dieser Gruppen zu in Längsrichtung stark orientierten Fasern, z. B. aromatischen Polyamidfasern mit ausserordentlich hoher Festigkeit und hoher thermischer Stabilität. Die seitliche Anbindung von mesogenen Gruppen an Polymerketten führt bei ausreichendem Abstand zu einer Kombination der Eigenschaften von Flüssigkristallen und Polymeren. Durch die Demobilisierung der flüssigkristallinen Gruppen wird eine Stabilisierung der Mesophasen erzielt (höhere Klärtemperaturen); andererseits können im Glaszustand des Polymeren anisotrope Phasen eingefroren werden.

Inzwischen ist jedoch ein beträchtliches Wissen über flüssigkristalline Polymere mit mesogenen Seitengruppen entstanden (vgl. H.Finkelmann in «Polymer Liquid Ctrystals», Academic Press, 1982, J. Frenzel, G. Rehage, Makromol. Chem. 184, 1685-1703 (1983); Makromol. Chem. Rapid Commun 1, 129 (1980); D. Hoppner, J.F. Wendorff, Die Angewandte Makromolekulare Chemie 125, 37-51 (1984).

In der industriellen Praxis haben die flüssigkristallinen Seitengruppen-Polymere bisher keine herausragende Anwendung gefunden.

Ungeachtet ihrer vielseitigen und weit vorangetriebenen technischen Anwendung, haben die Flüssigkristall-Systeme des Standes der Technik keineswegs alle Forderungen der Technik erfüllt. So besteht z. B. in der Regel wegen der Empfindlichkeit der Flüssigkristalle einerseits der Zwang zu deren Einbettung, bei einer nur beschränkten Auswahl von Einbettungsmitteln, andererseits sind sie als niedermolekulare Substanzen der Beeinflussung durch das Einbettungsmittel, penetrierende Substanzen usw. ausgesetzt. Es bestand daher Bedarf an einer Verwendung von Flüssigkristallen, welche eine Erweiterung der technischen Anwendungsmöglichkeiten einschloss.

Es wurde nun gefunden, dass die Forderungen der Technik in besonderem Masse dadurch erfüllt werden können, dass die Verwendung der Flüssigkristalle in Form von Homo- oder Copolymerisaten P vorliegt, die ganz oder überwiegend aus Monomeren der Formel I

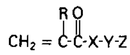 (I)

worin

R für Wasserstoff, Methyl oder Ethyl
X für eine Gruppe -O-, $-NR_1$ oder S, worin $R_1$ Wasserstoff oder Methyl bedeutet,
Y für eine (lineare) abstandhaltende Kette mit mindestens 2 Kettengliedern
Z für die mesogene Gruppe der Formel

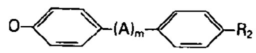

worin A für eine Brücke, bestehend aus einem Rest

-COO-, -CH = N-, -N=CH-,

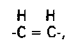

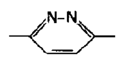

und $R_2$ für die Flügelgruppe Q, oder für

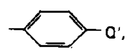

oder für

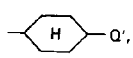

worin Q und Q' for Wasserstoff, $-(CH_2)_nH$, $-O-(CH_2)_nH$ $-COO(CH_2)_nH$, -CN, oder Halogen (unter Halogen seien im Sinne der vorliegenden Erfindung vor allem Fluor, Chlor und Brom verstanden), m für null oder eins und n für eine Zahl von 1 bis 8 stehen, aufgebaut sind, mit der Massgabe, dass

1) die Polymerisate P wenigstens einen Übergang nematisch- oder smektisch-isotrop zeigen,
2) die Polymerisate P aus homogener Lösung gewonnen worden sind.

In der Regel handelt es sich bei der abstandhaltenden Kette Y um eine solche mit 2 bis 20 Kettengliedern, vorzugsweise 2 bis 8 Kettengliedern, im allgemeinen um lineare, unverzweigte Ketten. Die Herstellung von Polymerisaten P aus den Monomeren der Formel I kann in an sich bekannter Weise erfolgen, in der Regel durch radikalische Polymerisation.

Die Monomeren der Formel I sind an sich bekannt oder sie können nach bekannten Methoden oder in Anlehnung an an sich bekannte Methoden hergestellt werden.

Das Molekulargewicht (bestimmt durch Gelchromatographie) $\overline{M}w$ liegt im allgemeinen im Bereich 4000 bis 500000. Die Polymerisate P können z.B. durch Fällung aus homogener Lösung gewonnen werden.

Die erfindungsgemässe technische Anwendung der Polymerisate P beruht auf der Erkenntnis, dass aus einer Lösung, beispielsweise durch Fällung gewonnene Proben des Polymerisats P, die im Temperaturbereich des glasigen Zustands hergestellt worden sind, ein höheres Volumen besitzen als Proben, die bis zur isotropen Schmelze der Polymerisate P erhitzt und durch Abkühlung wieder in den glasigen Zustand rücküberführt worden sind.

Damit eröffnet sich die technische Möglichkeit, in selektiver Weise durch Anwendung von Energie im Bereich z. B. relativ kleiner Domänen, gezielte Volumenkontraktionen bei dem Polymeren hervorzurufen.

Als Energie kommt in erster Linie thermische Energie und sich in thermische Energie umwandelnde Energieformen wie elektromagnetische Strahlung (Licht, insbesondere Laserlicht, IR) in Frage.

Die Domänen mit kontrahiertem Volumen unterscheiden sich von den unbehandelten Nachbardomänen z. B. durch unterschiedliche Dicke, verschiedene Brechungsindices und Lichtstreuung, Man kann diese Eigenschaft auch zur Erhöhung der lokalen Doppelbrechung benutzen.

Die beschriebenen Effekte kann man z. B. ausnutzen, indem man eine gleichmässig ebene Schicht aus Polymerisat vom Typ P bei Temperaturen unterhalb der Glastemperatur (Tg) des Polymeren frei erzeugt oder auf ein Substrat aufbringt.

Im letzteren Falle kann als Richtwert eine Schichtdicke von 5 bis 30 $\mu$ gelten.

Durch optisches Erwärmen können in diesen Schichten unter Ausnutzung der geschilderten Volumenkontraktion Vertiefungen erzeugt werden. Dadurch entstehen an diesen Stellen unterschiedliche Reflexionsverhältnisse, die z. B. bei schräg einfallendem (kohärentem) Licht zu einer Reflexion senkrecht zur Hauptoberfläche führen. Das derart reflektierte Licht kann z. B. über eine Fotodiode in ein Signal umgewandelt werden. Damit eröffnet sich die Anwendung für optische Datenspeichersysteme.

Dem Prinzip nach sind Datenspeichersysteme dieses Typs z. B. aus JA-OS 58-94146 (Chem. Abstr. 100, 165500h), JP-OS 58-94147 (Chem. Abstr. 100, 165501k), JP-OS 58-166547 (Chem. Abstr. 100, 165505q) bekannt.

Die folgenden Beispiele dienen zur Erläuterung der Erfindung.

Beispiel:

A. Herstellung eines Polymeren mit Flüssigkristall-Eighenschaften

150 g (0,36 Mol) des Monomeren der Formel I

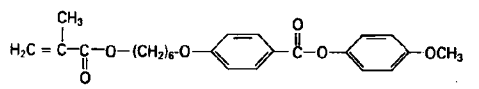 (I)

werden in 850 g Toluol gelöst, 0,3 g (1,8 mMol) Azobisisobutyronitril, das sind 0,5 Mol-% des Monomeren I, zugegeben und 8 h unter Inertgas bei 333 K erwärmt.

Das entstandene Polymer wird durch Fällen mit 1200 ml Methanol gewonnen und durch Lösen in Dichlormethan und erneutes Fällen mit Methanol gereinigt. Danach wird das erhaltene Pulver bei 303 K im Wasserstrahl-Vakuum bis zur Gewichtskonstanz getrocknet. Durch thermische Analyse wird eine glastemperatur (Tg) von 315 K und eine Klärtemperatur (Toluol) von 382 K bestimmt.

B. Herstellen einer aktiven Informationsträgerschicht

50 g des unter A. hergestellten Polymeren werden mit 2,5 g Toluol zu einer Paste verarbeitet und als 15 µm dicke Schicht auf eine Glasplatte aufgetragen. Diese Schicht wird im Ölpumpenvakuum bei 10 Pa und 350 K bis zur Gewichtskonstanz getrocknet. Damit wird eine Reflexionsschicht erhalten, die bei lokalem Erwärmen auf über 400 K einen Dickenschrumpf von etwa 15% zeigt.

**Patentansprüche**

1. Verfahren zur Informationsspeicherung mittels Informationsträgern basierend auf Flüssigkristallen, dadurch gekennzeichnet, daß die Flüssigkristalle Homo- oder Copolymerisate P, darstellen die ganz oder überwiegend aus Monomeren der Formel I

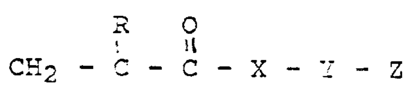 (I)

worin

R für Wasserstoff, Methyl oder Ethyl,

X für eine Gruppe -O-, -$NR_1$ oder S, worin $R_1$ Wasserstoff oder Methyl bedeutet,

Y für eine (lineare) abstandhaltende Kette mit mindestens 2 Kettengliedern

Z für die mesogene Gruppe der Formel

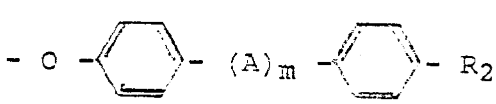

worin

A für eine Brücke, bestehend aus einem Rest

-COO-, -CH=N-, -N=CH,

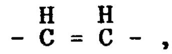

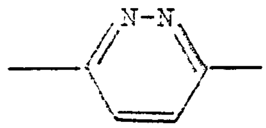

und $R_2$ für die Flügelgruppe Q, oder für

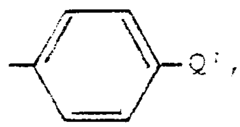

oder für

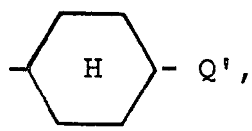

worin Q un Q'für Wasserstoff, $-(CH_2)_nH$, -O- $(CH_2)_mH$ $-COO(CH_2)_nH$, -CN, oder Halogen,

m für null oder eins und

n für eine Zahl von 1 - 8 stehen,

aufgebaut sind, mit der Maßgabe, daß

1) die Polymerisate P wenigstens einen Übergang nematisch- oder smektisch-isotrop zeigen,

2) die Polymerisate P aus homogener Lösung gewonnen worden sind,

wobei durch selektive Energieeinwirkung im Bereich kleiner Domänen gezielte Volumkontraktionen erzeugt werden, mit der Maßgabe, daß

3) vorgängig zu der selektiven Energieeinwirkung keine Orientierung der Polymerisate P vorgenommen worden war.

2. Verfahren gemäß Anspruch 1, dadurch gekennzeichnet, daß die Polymerisate P bei der Gewinnung unterhalb der Klärtemperatur gehalten werden.

3. Verfahren gemäß den Ansprüchen 1 und 2, dadurch gekennzeichnet, daß die Anwendungsformen der Polymerisate P unterhalb von deren Klärtemperatur erzeugt worden sind.

## Claims

1. Method of storing information by means of information carriers based on liquid crystals, characterized in that the liquid crystals are in the form of homopolymers or copolymers P which have been synthesized entirely or predominantly from monomers of the formula I

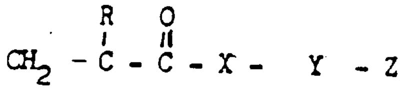 (I)

in which

R represents hydrogen, methyl or ethyl,

X represents an -O-, $-NR_1$ or S group in which $R_1$ denotes hydrogen or methyl,

Y represents a (linear) spacer chain having at least 2 chain members,

Z represents the mesogenic group of the formula

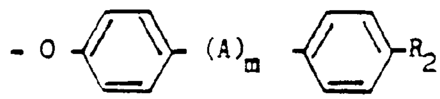

in which A represents a bridge comprising a

-COO-, - CH = N -, - N = CH -,

H H
- C = C - ,

radical

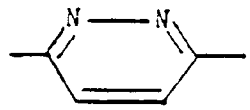

,

and $R_2$ represents the wing group Q or

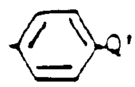

or

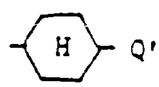

Q' in which Q and Q' represent hydrogen, $-(CH_2)_nH$, $-O-(CH_2)_mH-COO(CH_2)_nH$, -CN or halogen, m represents zero or one and n represents a number from 1 to 8, with the proviso that

1) the polymers P exhibit at least one nematic-isotropic or smectic-isotropic transition, and
2) the polymers P have been isolated from homogeneous solution, whilst the selective action of energy produces controlled volume contractions in the region of small domains, with the proviso that
3) no orientation of the polymers P has been carried out in preference to the selective action of energy.

**2.** Method according to Claim 1, characterized in that the polymers P are kept below the clear point during isolation.

**3.** Information carrier according to Claims 1 and 2, characterized in that the use forms of the polymers P have been produced below their clear points.

## Revendications

1.- Procédé de mémorisation d'informations à l'aide d'un support d'informations à base de cristaux liquides, caractérisé en ce que les cristaux liquides sous forme d'homo- ou de copolymères P sont constitués en totalité ou de façon prépondérante par des monomères de formule I

R O
$CH_2$ = C - C - X - Y - Z (I)

dans laquelle

R est mis pour un atome d'hydrogène ou pour un radical méthyle ou éthyle,

X pour un groupe -O-, $-NR_1$ ou S, $R_1$ représentant un atome d'hydrogène ou un radical méthyle,
Y pour une chaîne (linéaire) de maintien de l'écartement, comprenant au moins 2 maillons,
Z pour le groupe mésogène de formule

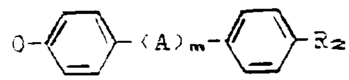

dans laquelle A est mis pour un pont constitué par un radical -COO-, -CH=N-, -N=CH-,

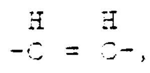,

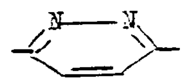,

et $R_2$ pour le groupe d'aile Q, pour

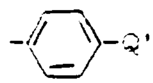

ou pour

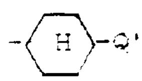,

Q et Q′ représentant un atome d'hydrogène, $-(CH_2)_nH$ , $-O-(CH_2)_mH$ , $-COO(CH_2)_nH$ , -CN ou un atome d'halogène,
m est mis pour 0 ou 1 et n pour un nombre de 1 à 8, avec ces conditions que

1) les polymères P présentent au moins une transition à l'isotropie nématique ou smectique,

2) les polymères P aient été obtenus à partir d'une solution homogène,

les polymères P présentant, par application sélective d'énergie au niveau de petits domaines, des contractions de volume orientées vers un objectif, avec la condition que

3) avant l'application sélective d'énergie, aucune orientation des polymères P n'ait été projetée.

2.- Procédé selon la revendication 1, caractérisé en ce que lors de la préparation, les polymères P sont maintenus au-dessous du point de clarté.

3.- Procédé selon la revendication 1 ou 2, caractérisé en ce que les formes d'utilisation des polymères P ont été produites au-dessous de leur point de clarté.